# EUROPÄISCHE PATENTSCHRIFT

(11) **EP 3 320 255 B1**
(45) Veröffentlichungstag und Bekanntmachung des Hinweises auf die Patenterteilung: **24.04.2019**
(21) Anmeldenummer: 16741534.8
(22) Anmeldetag: 11.07.2016
(51) Int. Cl.: F17C 1/02, F17C 1/16

(54) **DRUCKTANKANORDNUNG ZUR SPEICHERUNG UND ABGABE KOMPRIMIERTER FLUIDISCHER KRAFTSTOFFE**
PRESSURE VESSEL FOR THE STORAGE AND DISPENSING OF GASEOUS FUELS
RÉSERVOIR A HAUTE PRESSION POUR LA STOCKAGE DE CARBURANT GAZEUX

(30) Priorität: 10.07.2015 DE 202015005025 U
(43) Veröffentlichungstag der Anmeldung: 16.05.2018
(73) Patentinhaber: REHAU AG + Co, 95111 Rehau (DE)
(72) Erfinder: LANZL, Thomas, 93055 Regensburg (DE); HOFMANN, Franz, 95213 Münchberg (DE); GRUHL, Andreas, 01067 Dresden (DE)
(86) Internationale Anmeldenummer: PCT/EP2016/001188
(87) Internationale Veröffentlichungsnummer: WO 2017/008899

(56) Entgegenhaltungen:
- EP-A1- 2 418 413
- WO-A1-01/57429
- WO-A1-2013/026521
- WO-A2-2012/074815
- US-A1- 2009 199 574
- US-A1- 2009 308 874
- US-A1- 2010 170 906

## Beschreibung

Die vorliegende Erfindung betrifft eine Drucktankanordnung zur Speicherung und Abgabe komprimierter fluidischer Kraftstoffe. Drucktankanordnungen mit einem Druckbehälter, der einen Innenraum definiert, in welchem der Kraftstoff speicherbar ist, wobei der Druckbehälter eine größere Längserstreckung als Quererstreckung, einen, vorzugsweise länglich ausgebildeten, Mittelabschnitt und wenigstens eine an den Mittelabschnitt angrenzende Polkappe aufweist, wobei die Polkappe sich auf einen Endbereich hin verjüngt, und mit einer, vorzugsweise geflochtenen und/oder gewickelten Armierungsschicht, die den Mittelabschnitt und die Polkappe des Druckbehälters einhüllt, wobei die Armierungsschicht wenigstens zwei übereinander angeordnete faserverstärkte Einzellagen aufweist, und mit wenigstens einem Krafteinleitungselement, das einen Verbindungsabschnitt und einen Verankerungsabschnitt aufweist, sind aus dem Stand der Technik bekannt. Die Krafteinleitungselemente sind hierbei mit dem Ventil der Drucktankanordnung verbunden, über welches der fluidische Kraftstoff (z.B. Wasserstoff, oder Flüssiggas) entnehmbar ist. Eine entsprechende Drucktankanordnung ist aus der WO 2012/074815 A2 bekannt. In diesem Zusammenhang spricht man von einem sogenannten "Neck-Mounting".

Der Nachteil einer derartigen Drucktankanordnung besteht darin, dass sich die Baulänge des Drucktankes um die Dimension des Krafteinleitungselementes verlängert. Bei Einbau einer Drucktankanordnung des Standes der Technik in einen vordefinierten Bauraum (z.B. in einem Kraftfahrzeug) muss entsprechend der Drucktank verkürzt werden, wodurch sich dessen Speichervolumen reduziert.

Die Erfindung stellt sich daher die Aufgabe eine Drucktankanordnung mit den eingangs beschriebenen Merkmalen anzugeben, die gegenüber dem Stand der Technik ein größeres Speichervolumen aufweist.

Erfindungsgemäß wird diese Aufgabe dadurch gelöst, dass der Verankerungsabschnitt zwischen der Armierungsschicht und dem Druckbehälter und/oder zwischen den Einzellagen der Armierungsschicht angeordnet ist, und der Verbindungsabschnitt die Armierungsschicht durchdringt und von außerhalb der Armierungsschicht zugänglich ist, wobei der Verbindungsabschnitt in den Raum hineinragt, der eingeschlossen ist durch eine Mantelfläche erhalten durch eine gedachte Extrusion der äußeren Begrenzungslinie der größten Querschnittsfläche des armierten Mittelabschnittes in Richtung parallel zu einer Schwerelinie die aus den Flächenschwerpunkten aller Querschnittsflächen des Druckbehälters gebildet ist, durch eine den Endbereich schneidende Fläche die senkrecht zu der Schwerelinie steht, sowie durch die Oberfläche der Armierungsschicht.

Die erfindungsgemäße Drucktankanordnung nutzt vorteilhafterweise den Totraum der sich durch die Querschnittsverringerung des Drucktankbehälters im Bereich der Polkappe bzw. der Polkappen ergibt. Infolge dessen kann der Bauraum in welchem die Drucktankanordnung in ihrer bestimmungsgemäßen Verwendung aufgenommen wird, wesentlich besser ausgenutzt und so das Speichervolumen des Drucktanks gegenüber herkömmlichen Drucktankanordnungen vergrößert werden.

Der Verbindungsabschnitt ist hierbei bevorzugt von den Fasern der faserverstärkten Einzellagen umflochten oder umwickelt, so dass der Verbindungsabschnitt die Armierungsschicht durchdringt und von außerhalb der Armierungsschicht zugänglich ist oder bleibt wobei der Verankerungsabschnitt von wenigstens einer Einzellage überflochten und/oder überwickelt ist.

Bevorzugt ist der Verankerungsabschnitt zwischen den Einzellagen des letzten Drittels, bevorzugt des letzten Viertels, besonders bevorzugt des letzten Sechstels aller Einzellagen der Armierungsschicht, ausgehend von dem Druckbehälter, angeordnet.

Bevorzugt sind wenigstens zwei, besonders bevorzugt wenigstens vier Krafteinleitungselemente für die oder für jede Polkappe vorgesehen. Vorteilhafterweise sind die Krafteinleitungselemente entlang eines gedachten Lochkreises angeordnet. Die Krafteinleitungselemente können hierbei gleiche Abstände zueinander aufweisen und/oder gleiche Winkel zueinander einschließen. Beispielhaft können vier Krafteinleitungselemente vorgesehen sein, die im gleichmäßigen Abstand und im Winkel von jeweils 90° zueinander entlang eines gemeinsamen Lochkreises angeordnet sind.Der Verankerungsabschnitt oder die Verankerungsabschnitte können auf dem Druckbehälter oder auf einer Einzellage der Armierungsschicht mittels einer Klebstoffschicht und/oder mittels einer Fixiervorrichtung lagefixiert sein.

Das Krafteinleitungselement weist bevorzugt ein Außengewinde oder ein Innengewinde, weiter bevorzugt ein metrisches Außengewinde oder ein metrisches Innengewinde auf.

Das Krafteinleitungselement besteht bevorzugt aus einem rostfreien Stahlwerkstoff oder aus einem Aluminiumwerkstoff oder aus einem Magnesiumwerkstoff oder aus einem Titanwerkstoff.

Das Krafteinleitungselement kann mit einer Korrosionsschutzschicht versehen sein.

Der Verankerungsabschnitt kann eine plattenförmige oder tellerförmige Gestalt aufweisen.

Der Verankerungsabschnitt kann eine zu der angrenzenden Außengeometrie des Druckbehälters entsprechende Gestalt aufweisen.

Die Armierungsschicht kann ein thermoplastisches Harz und/oder ein duroplastisches Harz zur Stabilisierung der Fasern der faserverstärkten Einzellagen aufweisen.

Die Erfindung betrifft ferner ein Verfahren zur Herstellung einer vorstehend beschriebenen Drucktankanordnung zur Speicherung und Abgabe komprimierter fluidischer Kraftstoffe mit:
- einem Druckbehälter (1), der einen Innenraum definiert, in welchem der Kraftstoff speicherbar ist, wobei der Druckbehälter (1) eine größere Längserstreckung (L) als Quererstreckung (Q), einen Mittelabschnitt (M) und wenigstens eine an den Mittelabschnitt (M) angrenzende Polkappe (P1, P2) aufweist, wobei die Polkappe (P1, P2) sich auf einen Endbereich (E1, E2) hin verjüngt, und
- einer geflochtenen und/oder gewickelten Armierungsschicht (A), die den Mittelabschnitt (M) und die Polkappe (P1, P2) des Druckbehälters (1) einhüllt, wobei die Armierungsschicht (A) wenigstens zwei übereinander angeordnete faserverstärkte Einzellagen aufweist, und
- wenigstens einem Krafteinleitungselement (2), das einen Verbindungsabschnitt (3) und einen Verankerungsabschnitt (4) aufweist,
wobei der Verankerungsabschnitt (4) zwischen der Armierungsschicht (A) und dem Druckbehälter (1) und/oder zwischen den Einzellagen der Armierungsschicht (A) angeordnet wird, und der Verbindungsabschnitt (3) die Armierungsschicht (A) durchdringt und von außerhalb der Armierungsschicht (A) zugänglich ist, wobei
der Verbindungsabschnitt (3) in den Raum (R1, R2) hineinragt, der eingeschlossen ist durch eine Mantelfläche (MF) erhalten durch eine gedachte Extrusion der äußeren Begrenzungslinie (BL) der größten Querschnittsfläche des armierten Mittelabschnittes (M) in Richtung parallel zu einer Schwerelinie (S) die aus den Flächenschwerpunkten (FS) aller Querschnittsflächen des Druckbehälters (1) gebildet ist, durch eine den Endbereich (E1, E2) schneidende Fläche (EF1, EF2) die senkrecht zu der Schwerelinie (S) steht, sowie durch die Oberfläche (OF) der Armierungsschicht (A).

Der Verankerungsabschnitt kann von wenigstens einer Einzellage überflochten und/oder überwickelt werden, wobei der Verbindungsabschnitt gleichzeitig umflochten und/oder umwickelt wird, damit der Verbindungsabschnitt die Armierungsschicht durchdringt und von außerhalb der Armierungsschicht zugänglich ist oder zugänglich bleibt.

Der Verbindungsabschnitt kann hierfür eine angeformte oder lösbar mit dem Verbindungsabschnitt verbundene spitz zulaufende Geometrie, insbesondere eine konische, eine kegelförmige oder eine pyramidische Spitze, aufweisen, sodass während des Umflechtens und/oder Umwickelns des Verankerungsabschnittes die Fasern der faserverstärkten Einzellagen um den Verbindungsabschnitt herum abgelenkt werden. Hierdurch wird der Verbindungsabschnitt nicht überflochten oder überwickelt.

Die Armierungsschicht kann mit einem thermoplastischen Harz und/oder einem duroplastischen Harz druckinfiltriert werden. Besonders bevorzugt kann das Krafteinleitungselement oder können die Krafteinleitungselemente während der Druckinfiltration mittels einer mit dem Verbindungsabschnitt oder mit den Verbindungsabschnitten verbundenen, bevorzugt lösbar verbundenen, Positionierungsvorrichtung zueinander positioniert werden.

Im Folgenden wird die Erfindung anhand lediglich Ausführungsbeispiele darstellender Zeichnung erläutert. Es zeigen schematisch:
- Fig. 1: einen Seitenansicht einer ersten Drucktankanordnung;
- Fig. 2: eine Vorderansicht der ersten Drucktankanordnung aus Fig. 1;
- Fig. 3: einen Seitenansicht einer weiteren Drucktankanordnung;
- Fig. 4: eine Vorderansicht der weiteren Drucktankanordnung aus Fig. 3;
- Fig. 5a-c: verschiedene Ansichten eines Krafteinleitungselementes.

In den Figuren werden gleiche oder funktionsgleiche Elemente mit den gleichen Bezugszeichen versehen.

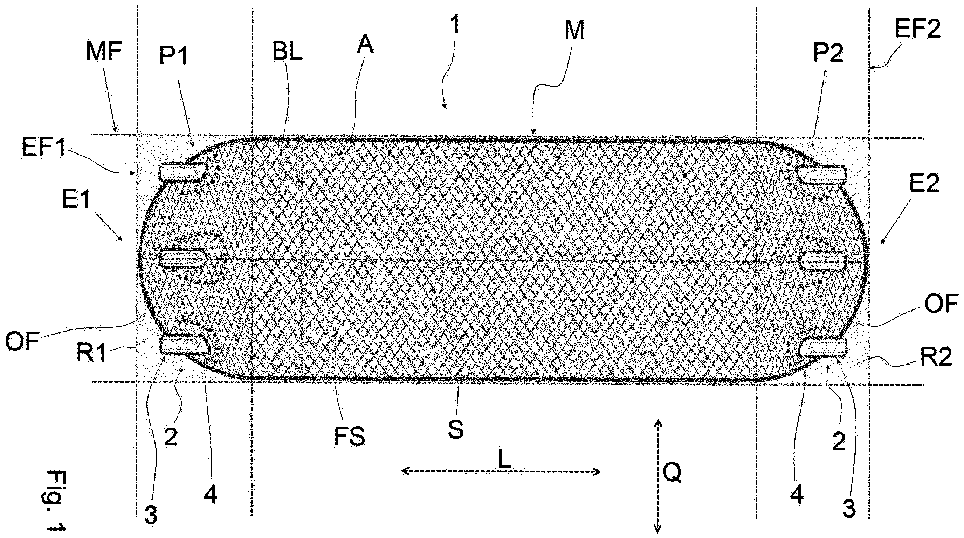

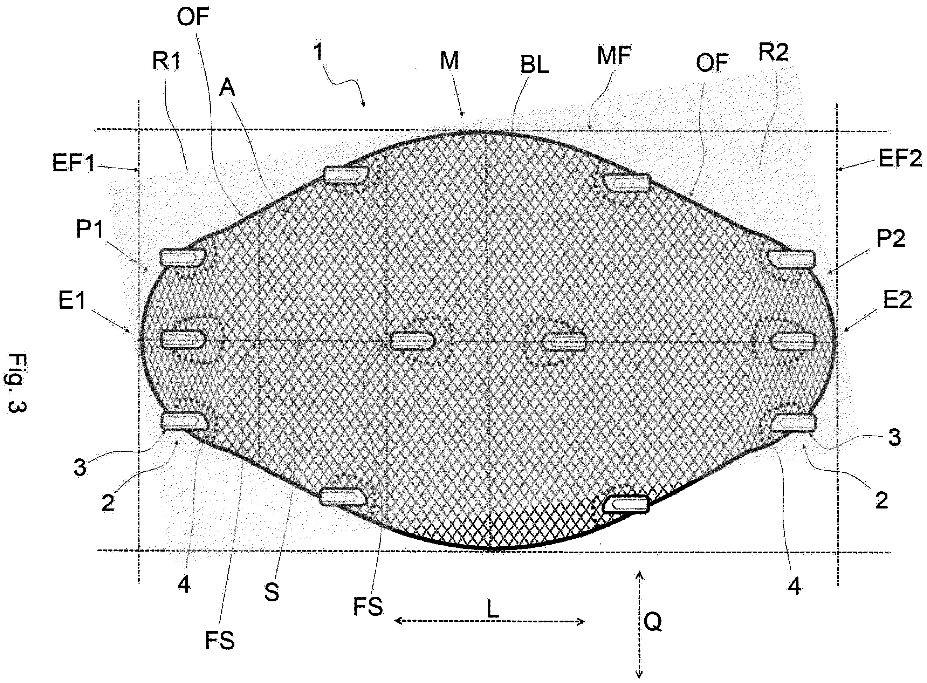

Die Fig. 1 und 3 zeigen eine Drucktankanordnung zur Speicherung und Abgabe komprimierter fluidischer Kraftstoffe mit einem Druckbehälter 1, der einen Innenraum definiert, in welchem der Kraftstoff speicherbar ist, wobei der Druckbehälter 1 eine größere Längserstreckung L als Quererstreckung Q, einen Mittelabschnitt M und wenigstens eine an den Mittelabschnitt M angrenzende Polkappe P1, P2 aufweist, wobei die Polkappe P1, P2 sich auf einen Endbereich E1, E2 hin verjüngt. Eine bevorzugt geflochtene und/oder gewickelte Armierungsschicht A, hüllt den Mittelabschnitt M und die Polkappe P1, P2 des Druckbehälters 1 ein, wobei die Armierungsschicht A wenigstens zwei übereinander angeordnete faserverstärkte Einzellagen aufweist. Die Drucktankanordnung umfasst ferner wenigstens ein Krafteinleitungselement 2, das einen Verbindungsabschnitt 3 und einen Verankerungsabschnitt 4 auf. Der Verankerungsabschnitt 4 ist zwischen der Armierungsschicht A und dem Druckbehälter 1 und/oder zwischen den Einzellagen der Armierungsschicht A angeordnet, und der Verbindungsabschnitt 3 durchdringt die Armierungsschicht A und ist von außerhalb der Armierungsschicht A zugänglich. Der Verbindungsabschnitt 3 ragt in den Raum R1, R2 hinein, der eingeschlossen ist durch eine Mantelfläche MF erhalten durch eine gedachte Extrusion der äußeren Begrenzungslinie BL der größten Querschnittsfläche des armierten Mittelabschnittes M (also des Druckbehälters plus Armierungsschichtdicke im Bereich des Mittelabschnittes) in Richtung parallel zu einer Schwerelinie S die aus den Flächenschwerpunkten FS aller Querschnittsflächen des Druckbehälters 1 gebildet ist, durch eine den Endbereich E1, E2 schneidende Fläche EF1, EF2 die senkrecht zu der Schwerelinie S steht, sowie durch die Oberfläche OF der Armierungsschicht A. Die Drucktankanordnung gemäß Fig. 3 unterscheidet sich von der Drucktankanordnung gemäß Fig. 1 durch eine Bombierung des Druckbehälters.

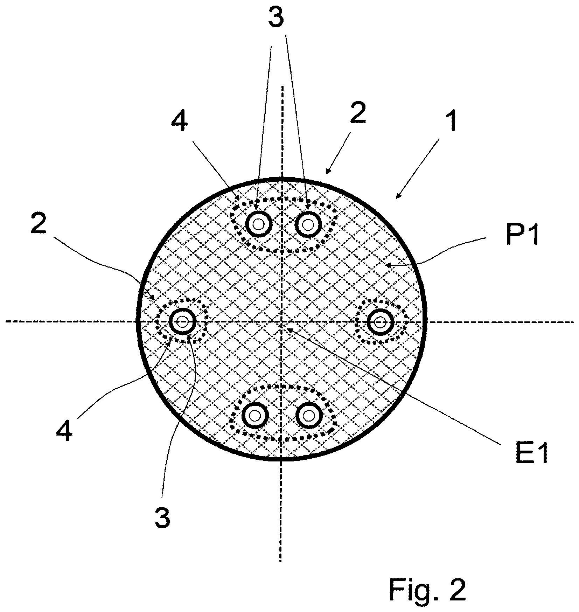

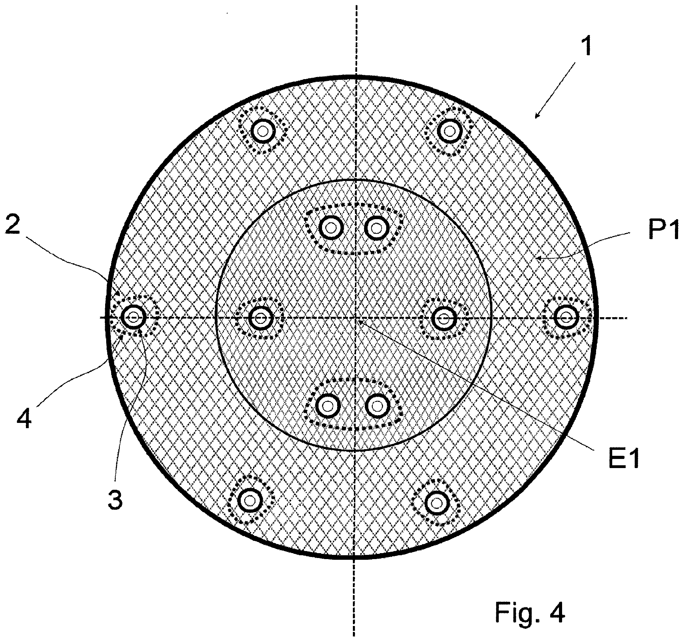

Die Fig. 2 und 4 zeigen jeweils die Vorderansichten der Drucktankanordnungen gemäß Fig.1 bzw. Fig 3. Hierbei ist ersichtlich, dass ein Krafteinleitungselement 2 mehrere Verbindungsabschnitte 3 aufweisen kann, oder dass zwei Krafteinleitungselemente 2 sich einen gemeinsamen Verankerungsabschnitt 4 teilen können.

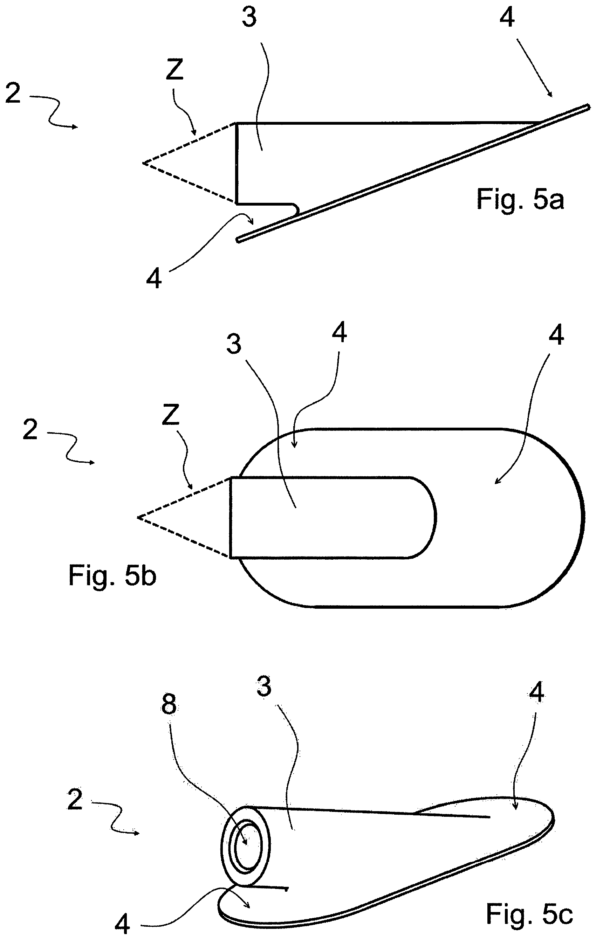

Die Fig. 5a bis 5c zeigen ein Krafteinleitungselement 2 in verschiedenen Ansichten. Das Krafteinleitungselement 2 kann aus einem rostfreien Stahlwerkstoff bestehen. Der Verankerungsabschnitt 4 weist eine plattenförmige und zu der angrenzenden Geometrie des Druckbehälters 1 entsprechende Gestalt auf. Der Verbindungsabschnitt 3 des Krafteinleitungselements 2 weist ein Innengewinde 8 auf. In den Fig. 5a und 5b ist schematisch angedeutet, dass der Verbindungsabschnitt 3 eine lösbar mit dem Verbindungsabschnitt 3 verbundene spitz zulaufende Geometrie aufweist, sodass während des Umflechtens und/oder Umwickelns des Verankerungsabschnittes 4 die Fasern der faserverstärkten Einzellagen um den Verbindungsabschnitt 3 herum abgelenkt werden. Hierdurch wird der Verbindungsabschnitt 3 nicht überflochten oder überwickelt. Die lösbare Verbindung ist in diesem Fall über eine Schraubverbindung realisiert.

## Patentansprüche

1. Drucktankanordnung zur Speicherung und Abgabe komprimierter fluidischer Kraftstoffe mit:
- einem Druckbehälter (1), der einen Innenraum definiert, in welchem der Kraftstoff speicherbar ist, wobei der Druckbehälter (1) eine größere Längserstreckung (L) als Quererstreckung (Q), einen Mittelabschnitt (M) und wenigstens eine an den Mittelabschnitt (M) angrenzende Polkappe (P1, P2) aufweist, wobei die Polkappe (P1, P2) sich auf einen Endbereich (E1, E2) hin verjüngt, und
- einer Armierungsschicht (A), die den Mittelabschnitt (M) und die Polkappe (P1, P2) des Druckbehälters (1) einhüllt, wobei die Armierungsschicht (A) wenigstens zwei übereinander angeordnete faserverstärkte Einzellagen aufweist, und
- wenigstens einem Krafteinleitungselement (2), das einen Verbindungsabschnitt (3) und einen Verankerungsabschnitt (4) aufweist,
**dadurch gekennzeichnet, dass**
der Verankerungsabschnitt (4) zwischen der Armierungsschicht (A) und dem Druckbehälter (1) und/oder zwischen den Einzellagen der Armierungsschicht (A) angeordnet ist, und der Verbindungsabschnitt (3) die Armierungsschicht (A) durchdringt und von außerhalb der Armierungsschicht (A) zugänglich ist, wobei
der Verbindungsabschnitt (3) in den Raum (R1, R2) hineinragt, der eingeschlossen ist
durch eine Mantelfläche (MF) erhalten durch eine gedachte Extrusion der äußeren Begrenzungslinie (BL) der größten Querschnittsfläche des armierten Mittelabschnittes (M) in Richtung parallel zu einer Schwerelinie (S) die aus den Flächenschwerpunkten (FS) aller Querschnittsflächen des Druckbehälters (1) gebildet ist,
durch eine den Endbereich (E1, E2) schneidende Fläche (EF1, EF2) die senkrecht zu der Schwerelinie (S) steht,
sowie durch die Oberfläche (OF) der Armierungsschicht (A).

2. Drucktankanordung nach Anspruch 1, **dadurch gekennzeichnet, dass** der Verankerungsabschnitt (4) eine plattenförmige oder tellerförmige Gestalt aufweist.

3. Drucktankanordung nach Anspruch 1 oder 2, **dadurch gekennzeichnet, dass** der Verankerungsabschnitt (4) eine zu der angrenzenden Außengeometrie des Druckbehälters (1) entsprechende Gestalt aufweist.

4. Drucktankanordnung nach einem der vorstehenden Ansprüche, **dadurch gekennzeichnet, dass** die Armierungsschicht (A) eine geflochtene und/oder gewickelte Armierungsschicht (A) ist.

5. Drucktankanordnung nach einem der vorstehenden Ansprüche, **dadurch gekennzeichnet, dass** der Druckbehälter (1) einen länglich ausgebildeten Mittelabschnitt (M) aufweist.

6. Drucktankanordnung nach einem der vorstehenden Ansprüche, **dadurch gekennzeichnet, dass** der Verankerungsabschnitt (4) zwischen den Einzellagen des letzten Drittels, bevorzugt des letzten Viertels, besonders bevorzugt des letzten Sechstels aller Einzellagen der Armierungsschicht (A), ausgehend von dem Druckbehälter (1), angeordnet ist.

7. Drucktankanordnung nach einem der vorstehenden Ansprüche, **dadurch gekennzeichnet, dass** wenigstens zwei, bevorzugt wenigstens vier Krafteinleitungselemente (2) für die oder für jede Polkappe (P1, P2) vorgesehen sind und die Krafteinleitungselemente (2) entlang eines gedachten Lochkreises angeordnet sind, wobei die Krafteinleitungselemente (2) gleiche Abstände zueinander aufweisen und/oder gleiche Winkel zueinander einschließen.

8. Drucktankanordnung nach einem der vorstehenden Ansprüche, **dadurch gekennzeichnet, dass** der Verankerungsabschnitt (4) oder die Verankerungsabschnitte (4) auf dem Druckbehälter (1) oder auf einer Einzellage der Armierungsschicht (A) mittels einer Klebstoffschicht und/oder mittels einer Fixiervorrichtung lagefixiert sind.

9. Verfahren zur Herstellung einer Drucktankanordnung zur Speicherung und Abgabe komprimierter fluidischer Kraftstoffe, insbesondere einer Drucktankanordnung nach einem der Ansprüche 1 bis 8, mit:
- einem Druckbehälter (1), der einen Innenraum definiert, in welchem der Kraftstoff speicherbar ist, wobei der Druckbehälter (1) eine größere Längserstreckung (L) als Quererstreckung (Q), einen Mittelabschnitt (M) und wenigstens eine an den Mittelabschnitt (M) angrenzende Polkappe (P1, P2) aufweist, wobei die Polkappe (P1, P2) sich auf einen Endbereich (E1, E2) hin verjüngt, und
- einer geflochtenen und/oder gewickelten Armierungsschicht (A), die den Mittelabschnitt (M) und die Polkappe (P1, P2) des Druckbehälters (1) einhüllt, wobei die Armierungsschicht (A) wenigstens zwei übereinander angeordnete faserverstärkte Einzellagen aufweist, und
- wenigstens einem Krafteinleitungselement (2), das einen Verbindungsabschnitt (3) und einen Verankerungsabschnitt (4) aufweist,
wobei der Verankerungsabschnitt (4) zwischen der Armierungsschicht (A) und dem Druckbehälter (1) und/oder zwischen den Einzellagen der Armierungsschicht (A) angeordnet wird, und der Verbindungsabschnitt (3) die Armierungsschicht (A) durchdringt und von außerhalb der Armierungsschicht (A) zugänglich ist, wobei
der Verbindungsabschnitt (3) in den Raum (R1, R2) hineinragt, der eingeschlossen ist durch eine Mantelfläche (MF) erhalten durch eine gedachte Extrusion der äußeren Begrenzungslinie (BL) der größten Querschnittsfläche des armierten Mittelabschnittes (M) in Richtung parallel zu einer Schwerelinie (S) die aus den Flächenschwerpunkten (FS) aller Querschnittsflächen des Druckbehälters (1) gebildet ist, durch eine den Endbereich (E1, E2) schneidende Fläche (EF1, EF2) die senkrecht zu der Schwerelinie (S) steht, sowie durch die Oberfläche (OF) der Armierungsschicht (A).

10. Verfahren nach Anspruch 9, **dadurch gekennzeichnet, dass** der Verankerungsabschnitt (4) von wenigstens einer Einzellage überflochten und/oder überwickelt wird, wobei der Verbindungsabschnitt (3) gleichzeitig umflochten und/oder umwickelt wird, damit der Verbindungsabschnitt (3) die Armierungsschicht (A) durchdringt und von außerhalb der Armierungsschicht (A) zugänglich ist oder zugänglich bleibt, wobei der Verbindungsabschnitt (3) hierfür eine angeformte oder lösbar mit dem Verbindungsabschnitt (3) verbundene spitz zulaufende Geometrie (Z), insbesondere eine konische, eine kegelförmige oder eine pyramidische Spitze, aufweist, sodass während des Umflechtens und/oder Umwickelns des Verankerungsabschnittes (4) die Fasern der faserverstärkten Einzellagen um den Verbindungsabschnitt (3) herum abgelenkt werden.

## Claims

1. A pressure tank arrangement for storing and discharging compressed liquid fuels, having:
- a pressure vessel (1) defining an internal space in which the fuel can be stored, wherein the pressure vessel (1) has a greater longitudinal extension (L) than transverse extension (Q), a middle section (M) and at least one polar cap (P1, P2) adjacent to the middle section (M), wherein the polar cap (P1, P2) tapers towards an end region (E1, E2), and
- a reinforcing layer (A), which envelops the middle section (M) and the polar cap (P1, P2) of the pressure vessel (1), wherein the reinforcing layer (A) has at least two superposed fibre-reinforced individual plies, and
- at least one force transmission element (2) having a connecting section (3) and an anchoring section (4),
**characterised in that**
the anchoring section (4) is arranged between the reinforcing layer (A) and the pressure vessel (1) and/or between the individual plies of the reinforcing layer (A), and the connecting section (3) penetrates the reinforcing layer (A) and is accessible from outside the reinforcing layer (A), wherein
the connecting section (3) projects into the space (R1, R2) which is enclosed
by a lateral surface (MF) obtained by an imaginary extrusion of the external boundary line (BL) of the largest cross-sectional surface of the reinforced middle section (M) in a direction parallel to a centre line of gravity (S) which is formed from the area centroids (FS) of all cross-sectional surfaces of the pressure vessel (1),
by a surface (EF1, EF2) which is perpendicular to the centre line of gravity (S) and which intersects the end region (E1, E2),
and by the surface (OF) of the reinforcing layer (A).

2. The pressure tank arrangement according to claim 1, **characterised in that** the anchoring section (4) has a panel-like or plate-like shape.

3. The pressure tank arrangement according to claim 1 or 2, **characterised in that** the anchoring section (4) has a shape corresponding to the adjacent external geometry of the pressure vessel (1).

4. The pressure tank arrangement according to one of the preceding claims, **characterised in that** the reinforcing layer (A) is a braided and/or wound reinforcing layer (A).

5. The pressure tank arrangement according to one of the preceding claims, **characterised in that** the pressure vessel (1) has an elongated middle section (M).

6. The pressure tank arrangement according to one of the preceding claims, **characterised in that** the anchoring section (4) is arranged between the individual plies of the last third, preferably of the last quarter, particularly preferably of the last sixth, of all the individual plies of the reinforcing layer (A), starting from the pressure vessel (1).

7. The pressure tank arrangement according to one of the preceding claims, **characterised in that** at least two, preferably at least four force transmission elements (2) are provided for the or for each polar cap (P1, P2) and the force transmission elements (2) are arranged along an imaginary bolt circle, wherein the force transmission elements (2) are equidistant from each other and/or at equal angles to each other.

8. The pressure tank arrangement according to one of the preceding claims, **characterised in that** the anchoring section (4) or anchoring sections (4) is/are held in position on the pressure vessel (1) or on an individual ply of the reinforcing layer (A) by means of an adhesive layer and/or by means of a fixing device.

9. A method of producing a pressure tank arrangement for storing and discharging compressed liquid fuels, in particular a pressure tank arrangement according to one of claims 1 to 8, having:
- a pressure vessel (1) defining an internal space in which the fuel can be stored, wherein the pressure vessel (1) has a greater longitudinal extension (L) than transverse extension (Q), a middle section (M) and at least one polar cap (P1, P2) adjacent to the middle section (M), wherein the polar cap (P1, P2) tapers towards an end region (E1, E2), and
- a braided and/or wound reinforcing layer (A), which envelops the middle section (M) and the polar cap (P1, P2) of the pressure vessel (1), wherein the reinforcing layer (A) has at least two superposed fibre-reinforced individual plies, and
- at least one force transmission element (2) having a connecting section (3) and an anchoring section (4),
wherein the anchoring section (4) is arranged between the reinforcing layer (A) and the pressure vessel (1) and/or between the individual plies of the reinforcing layer (A), and the connecting section (3) penetrates the reinforcing layer (A) and is accessible from outside the reinforcing layer (A), wherein
the connecting section (3) projects into the space (R1, R2), which is enclosed by a lateral surface (MF) obtained by an imaginary extrusion of the external boundary line (BL) of the largest cross-sectional surface of the reinforced middle section (M) in a direction parallel to a centre line of gravity (S) which is formed from the area centroids (FS) of all cross-sectional surfaces of the pressure vessel (1), by a surface (EF1, EF2) which is perpendicular to the centre line of gravity (S) and which intersects the end region (E1, E2), and by the surface (OF) of the reinforcing layer (A).

10. The method according to claim 9, **characterised in that** the anchoring section (4) is overbraided and/or overwrapped by at least one individual ply, wherein the connecting section (3) is at the same time braided around and/or wrapped around so that the connecting section (3) penetrates the reinforcing layer (A) and is accessible or remains accessible from outside the reinforcing layer (A), wherein to this end the connecting section (3) has a pointed geometry (Z), in particular a conical, tapered or pyramidal tip, integrally formed on or releasably connected to the connecting section (3) such that during the braiding and/or wrapping of the anchoring section (4) the fibres of the fibre-reinforced individual plies are deflected around the connecting section (3).

## Revendications

1. Ensemble formant réservoir sous pression servant à stocker et à distribuer des carburants fluides comprimés, avec :
- un contenant sous pression (1), qui définit un espace intérieur, dans lequel le carburant peut être stocké, dans lequel le contenant sous pression (1) présente une extension longitudinale (L) plus grande que l'extension transversale (Q), une section centrale (M) et au moins une calotte polaire (P1, P2) jouxtant la section centrale (M), dans lequel la calotte polaire (P1, P2) se rétrécit en direction d'une zone d'extrémité (E1, E2), et
- une couche d'armature (A), qui enveloppe la section centrale (M) et la calotte polaire (P1 P2) du contenant sous pression (1), dans lequel la couche d'armature (A) présente au moins deux strates individuelles renforcées par des fibres disposées les unes au-dessus des autres, et
- au moins un élément d'application de force (2), qui présente une section de liaison (3) et une section d'ancrage (4),
**caractérisé en ce que**
la section d'ancrage (4) est disposée entre la couche d'armature (A) et le contenant sous pression (1) et/ou entre les strates individuelles de la couche d'armature (A), et la section de liaison (3) traverse la couche d'armature (A) et est accessible depuis l'extérieur de la couche d'armature (A), dans lequel
la section de liaison (3) dépasse à l'intérieur de l'espace (R1, R2), qui est enfermé par une face enveloppante (MF) obtenue par une extrusion imaginaire de la ligne de limitation (BL) extérieure de la plus grande face de section transversale de la section centrale (M) armée dans une direction parallèle par rapport à une ligne de gravité (S), qui est formée à partir des centres de gravité de face (FS) de toutes les faces de section transversale du contenant sous pression (1),
par une face (EF1, EF2) coupant la zone d'extrémité (E1, E2), qui est perpendiculaire à la ligne de gravité (S),
ainsi que par la surface (OF) de la couche d'armature (A).

2. Ensemble formant réservoir sous pression selon la revendication 1, **caractérisé en ce que** la section d'ancrage (4) présente une configuration en forme de panneau ou en forme de disque.

3. Ensemble formant réservoir sous pression selon la revendication 1 ou 2, **caractérisé en ce que** la section d'ancrage (4) présente une configuration correspondant à la géométrie extérieure jouxtant du contenant sous pression (1).

4. Ensemble formant réservoir sous pression selon l'une quelconque des revendications précédentes, **caractérisé en ce que** la couche d'armature (A) est une couche d'armature (A) tressée et/ou enroulée.

5. Ensemble formant réservoir sous pression selon l'une quelconque des revendications précédentes, **caractérisé en ce que** le contenant sous pression (1) présente une section centrale (M) réalisée de manière allongée.

6. Ensemble formant réservoir sous pression selon l'une quelconque des revendications précédentes, **caractérisé en ce que** la section d'ancrage (4) est disposée entre les strates individuelles du dernier tiers, de manière préférée du dernier quart, de manière particulièrement préférée du dernier sixième de toutes les strates individuelles de la couche d'armature (A) en partant du contenant sous pression (1).

7. Ensemble formant réservoir sous pression selon l'une quelconque des revendications précédentes, **caractérisé en ce qu'**au moins deux, de manière préférée au moins quatre éléments d'application de force (2) sont prévus pour la ou pour chaque calotte polaire (P1, P2) et les éléments d'application de force (2) sont disposés le long d'un cercle perforé imaginaire, dans lequel les éléments d'application de force (2) présentent les uns par rapport aux autres des distances identiques et/ou forment les uns par rapport aux autres des angles identiques.

8. Ensemble formant réservoir sous pression selon l'une quelconque des revendications précédentes, **caractérisé en ce que** la section d'ancrage (4) ou les sections d'ancrage (4) sont bloquées en position sur le contenant sous pression (1) ou sur une strate individuelle de la couche d'armature (A) au moyen d'une couche de colle et/ou au moyen d'un dispositif de blocage.

9. Procédé servant à fabriquer un ensemble formant réservoir sous pression servant à stocker et à distribuer des carburants fluides comprimés, en particulier un ensemble formant réservoir sous pression selon l'une quelconque des revendications 1 à 8, avec :
- un contenant sous pression (1), qui définit un espace intérieur, dans lequel le carburant peut être stocké, dans lequel le contenant sous pression (1) présente une extension longitudinale (L) plus grande que l'extension transversale (Q), une section centrale (M) et au moins une calotte polaire (P1, P2) jouxtant la section centrale (M), dans lequel la calotte polaire (P1, P2) se rétrécit en direction d'une zone d'extrémité (E1, E2), et
- une couche d'armature (A) tressée et/ou enroulée, qui enveloppe la section centrale (M) et la calotte polaire (P1, P2) du contenant sous pression (1), dans lequel la couche d'armature (A) présente au moins deux strates individuelles renforcées par des fibres disposées les unes au-dessus des autres, et
- au moins un élément d'application de force (2), qui présente une section de liaison (3) et une section d'ancrage (4),
dans lequel la section d'ancrage (4) est disposée entre la couche d'armature (A) et le contenant sous pression (1) et/ou entre les strates individuelles de la couche d'armature (A), et la section de liaison (3) traverse la couche d'armature (A) et est accessible depuis l'extérieur de la couche d'armature (A), dans lequel
la section de liaison (3) dépasse à l'intérieur de l'espace (R1, R2), qui est enfermé par une surface enveloppante (MF) obtenue par une extrusion imaginaire de la ligne de délimitation (BL) extérieure de la plus grande face de section transversale de la section centrale (M) armée dans une direction parallèle par rapport à une ligne de gravité (S), qui est formée à partir des centres de gravité de face (FS) de toutes les faces de section transversale du contenant sous pression (1), par une face (EF1, EF2) coupant la section d'extrémité (E1, E2), qui est perpendiculaire par rapport à la ligne de gravité (S), ainsi que par la surface (OF) de la couche d'armature (A).

10. Procédé selon la revendication 9, **caractérisé en ce que** la section d'ancrage (4) est recouverte par tressage et/ou par enroulement d'au moins une strate individuelle, dans lequel la section de liaison (3) est simultanément tressée et/ou enroulée pour que la section de liaison (3) traverse la couche d'armature (A) et soit accessible ou reste accessible depuis l'extérieur de la couche d'armature (A), dans lequel la section de liaison (3) présente à cet effet une géométrie (Z) convergeant en forme de pointe formée ou reliée de manière amovible à la section de liaison (3), en particulier une pointe conique, une pointe en forme de cône ou une pointe en pyramide, de sorte que pendant le tressage et/ou l'enroulement de la section d'ancrage (4), les fibres des strates individuelles renforcées par des fibres sont déviées tout autour de la section de liaison (3).
